Europäisches Patentamt

European Patent Office

Office européen des brevets

(19)

(11) Veröffentlichungsnummer: **0 367 925**

**A2**

(12) **EUROPÄISCHE PATENTANMELDUNG**

(21) Anmeldenummer: **89115758.8**

(22) Anmeldetag: **26.08.89**

(51) Int. Cl.⁵: **H04N 11/16, H04N 9/64**

(30) Priorität: **10.11.88 DE 3838122**

(43) Veröffentlichungstag der Anmeldung:
**16.05.90 Patentblatt 90/20**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Wendland, Broder, Prof.-Dr. Grundig**
**E.M.V.**
**Max Grundig holländ. Stiftung & Co KG**
**Kurgartenstrasse 37 D-8510 Fuerth(DE)**
Erfinder: **Silverberg, Michael,Dr.-Ing. Grundig**
**E.M.V.**
**Max Grundig holländ. Stiftung & Co KG**
**Kurgartenstrasse 37 D-8510 Fuerth(DE)**

(54) **Einrichtung zur Codierung und Decodierung von Farbfernsehsignalen nach dem PAL-Standard und Verfahren zur Übertragung von Farbfernsehsignalen nach dem PAL-Standard.**

(57) Bei einer bekannten Einrichtung werden im Luminanzkanal und im Chrominanzkanal dreidimensionale Filterungen derart durchgeführt, daß sowohl der Luminanz- als auch der Chrominanzkomponente im dreidimensionalen Frequenzraum eindeutig Plätze zugeordnet werden. Die PAL-Codierung bzw. Decodierung erfolgt auf herkömmliche Weise mittels Quadraturmodulation bzw. Quadraturdemodulation. Bei der neuen Einrichtung soll der durch die dreidimensionale Filterung verursachte Bandbreitenverlust der Luminanzkomponente reduziert sein.

Hierzu wird im Coder das PAL-modulierte Chrominanzsignal einer mehrdimensionalen Restseitenbandfilterung unterworfen. Um empfangsseitiges Übersprechen der Farbdifferenzsignale untereinander weitgehend zu reduzieren. bzw. zu vermeiden, werden die Farbdifferenzsignale im Rahmen der mehrdimensionalen Filterung in Richtung vertikaler Frequenzen tiefpaßgefiltert.

PAL-Coder, PAL-Decoder, PAL-Übertragungssysteme.

FIGUR 1

EINRICHTUNG ZUR CODIERUNG UND DECODIERUNG VON FARBFERNSEHSIGNALEN NACH DEM PAL-STANDARD UND VERFAHREN ZUR ÜBERTRAGUNG VON FARBFERNSEHSIGNALEN NACH DEM PAL-STANDARD

Die Erfindung betrifft eine Einrichtung zur Codierung von Farbfernsehsignalen nach dem PAL-Standard sowie eine Einrichtung zur Decodierung von Farbfernsehsignalen nach dem PAL-Standard. Ferner betrifft die Erfindung Verfahren zur Übertragung von Farbfernsehsignalen nach dem PAL-Standard.

Eine Einrichtung mit den im Oberbegriff des Anspruchs 1 angegebenen Merkmalen ist aus der nicht vorveröffentlichten Deutschen Patentanmeldung mit dem Aktenzeichen P 38 07 248.3 bekannt. Bei dieser bekannten Einrichtung werden im Luminanzkanal und im Chrominanzkanal dreidimensionale Filterungen derart durchgeführt, daß sowohl der Luminanz- als auch der Chrominanzkomponente im dreidimensionalen Frequenzraum eindeutig Plätze zugeordnet werden, so daß empfangsseitig keine Störungen in Form von "cross-colour" und "cross-luminance" auftreten. Die PAL-Codierung bzw. PAL-Decodierung erfolgt - wie allgemein üblich - mittels Quadraturmodulation bzw. Quadraturdemodulation. Bei dieser bekannten Einrichtung führt die dreidimensionale Bandbegrenzung der Luminanzkomponente zu einem Verlust an Luminanzbandbreite.

Der Erfindung liegt die Aufgabe zugrunde, eine Einrichtung der im Oberbegriff des Anspruchs 1 angegebenen Art derart weiterzubilden, daß der Verlust an Luminanzbandbreite reduziert wird.

Diese Aufgabe wird bei einer Einrichtung der im Oberbegriff des Anspruchs 1 angegebenen Art durch die im kennzeichnenden Teil des Anspruchs 1 angegebenen Merkmale gelöst. Eine vorteilhafte Ausgestaltung ergibt sich aus dem Anspruch 2. Eine Einrichtung zur Decodierung von Farbfernsehsignalen nach dem PAL-Standard ist Gegenstand des Anspruchs 3. Die Ansprüche 4 und 5 betreffen Verfahren zur Übertragung von Farbfernsehsignalen nach dem PAL-Standard.

Die Vorteile der Erfindung bestehen im wesentlichen darin, daß im Vergleich zur bekannten Schaltung die nutzbare Luminanzbandbreite erhöht ist. Insbesondere kann im Vergleich zu der aus der Patentanmeldung P 38 07 248.3 bekannten Einrichtung in Richtung horizontaler Frequenzen der Bereich zwischen 3.6 und 4.43 MHz, in Richtung vertikaler Frequenzen der Bereich zwischen -78°/ph und 78°/ph (entspricht umgerechnet -1.85 MHz bis +1.85 MHz) und in Richtung zeitlicher Frequenzen der Bereich zwischen $f^t$ = 6.25 Hz und 18.75 Hz zur Übertragung von Luminanzinformation genutzt werden.

Weitere Vorteile der Erfindung ergeben sich aus der Erläuterung von Ausführungsbeispielen anhand der Figuren.

Es zeigt

- Figur 1 ein Ausführungsbeispiel für eine Einrichtung zur Codierung von Farbfernsehsignalen nach dem PAL-Standard,
- Figur 2 ein Ausführungsbeispiel für eine Einrichtung zur Decodierung von Farbfernsehsignalen nach dem PAL-Standard,
- Figur 3 ein Spektrum eines vertikal tiefpaßgefilterten Chrominanzsignals in der $f^x$, $f^y$-Ebene,
- Figur 4 eine Skizze zur Erläuterung der Restseitenbandfilterung in $f^x$-Richtung,
- Figur 5 eine Skizze zur Erläuterung der Restseitenbandfilterung in $f^y$-Richtung,
- Figur 6 eine Skizze zur Erläuterung der Restseitenbandfilterung in $f^t$-Richtung.

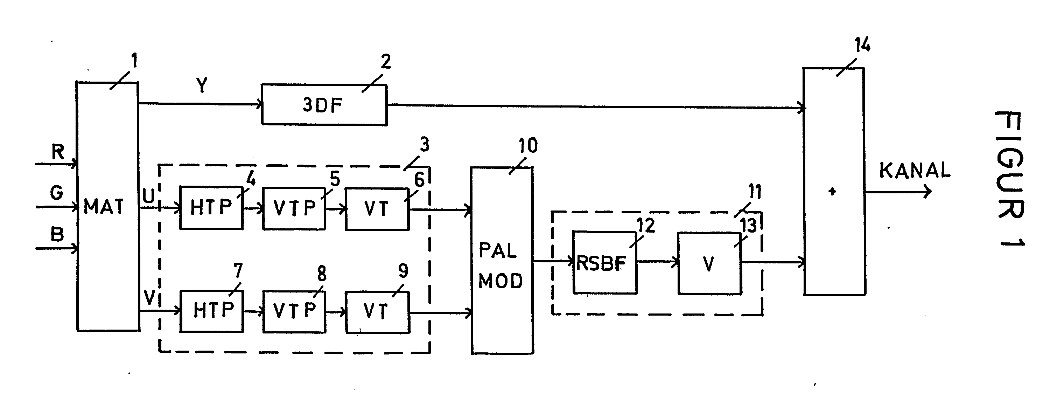

Die Figur 1 zeigt ein Ausführungsbeispiel für eine Einrichtung zur Codierung von Farbfernsehsignalen nach dem PAL-Standard. Am Eingang der Einrichtung liegen in einer Fernsehkamera erzeugte RGB-Signale an. Aus diesen werden in einer Matrixschaltung 1 ein Luminanzsignal Y, ein erstes Farbdifferenzsignal U und ein zweites Farbdifferenzsignal V erzeugt. Das Luminanzsignal Y wird einer im Luminanzkanal angeordneten dreidimensionalen Filterschaltung 2 zugeführt. Das dreidimensional gefilterte Luminanzsignal wird einem Eingang einer Additionsschaltung 14 zugeführt.

Die Farbdifferenzsignale U und V werden einer dreidimensionalen Filterschaltung 3 zugeführt. In dieser dreidimensionalen Filterschaltung 3 durchläuft das Farbdifferenzsignal U ein horizontales Tiefpaßfilter 4, ein vertikales Tiefpaßfilter 5 und ein kombiniertes vertikal-zeitliches Filter 6. Das Farbdifferenzsignal V durchläuft ein horizontales Tiefpaßfilter 7, ein vertikales Tiefpaßfilter 8 und ein kombiniertes vertikal-zeitliches Filter 9.

In den horizontalen Tiefpaßfiltern 4 bzw. 7 werden die Farbdifferenzsignale jeweils in horizontaler Richtung bei 1.3 MHz bandbegrenzt. In den vertikalen Tiefpaßfiltern 5 bzw. 8 werden die Farbdifferenzsignale jeweils in vertikaler Richtung bei 78°/ph bandbegrenzt. Diese Bandbegrenzung in vertikaler Richtung ist im Unterschied zum eingangs genannten Stand der Technik notwendig, um eine empfangsseitige Trennung der beiden Farbdifferenzsignale voneinander zu ermöglichen. Die Filter 4 und 5 bzw. 7 und 8 können alternativ zu der in der Figur dargestellten Kaskadierung zweier eindimensionaler Filter auch als allgemeines mehrdimensionales Filter realisiert werden (planares Filter). In den vertikal-zeitlichen Filtern 6 bzw. 9 werden die Farbdifferenzsignale in der $f^y$, $f^t$-Ebene bandbegrenzt. Diese Bandbegrenzung in der $f^y$, $f^t$-Ebene erfolgt zur Verringerung von "cross-luminance"-Effekten. Gegebenenfalls können die vertikal-zeitlichen Filter 6 und 9 auch weggelassen werden, da die "cross-luminance"-Effekte vom Zuschauer in der Regel als nicht allzusehr störend angesehen werden.

Die auf die vorstehend beschriebene Weise dreidimensional gefilterten Farbdifferenzsignale werden einem herkömmlichen PAL-Modulator 10 zugeführt und dort in grundsätzlich bekannter Weise in ein moduliertes Chrominanzsignal umgewandelt.

Das modulierte Chrominanzsignal wird anschließend einer Schaltung 11 zur dreidimensionalen Restseitenbandfilterung zugeführt, die aus einem Restseitenbandfilter 12 und einem Verstärker 13 besteht, dessen Verstärkungsfaktor 2 ist.

Das Ausgangssignal des Verstärkers 13 gelangt an einen zweiten Eingang der Addierschaltung 14, an deren Ausgang folglich ein codiertes Farbfernsehsignal zur Verfügung steht.

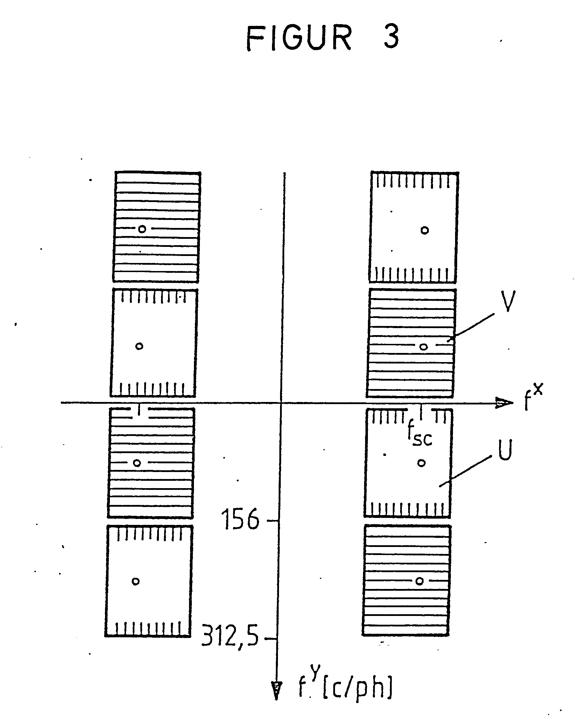

Im folgenden wird mit Hilfe der Figuren 3 - 6 die Wirkungsweise von vertikalem Tiefpaßfilter 5 bzw. 8 und dem dreidimensionalen Restseitenbandfilter 12 erläutert.

Die Figur 3 zeigt ein Chrominanzspektrum in der $f^x$, $f^y$-Ebene am Ausgang des PAL-Modulators 10. Aufgrund der zeilenalternierenden Umschaltung des Farbdifferenzsignals V sind die Spektren von U und V in Richtung vertikaler Frequenzen gegeneinander versetzt und sind in Richtung horizontaler Frequenzen um den Farbhilfsträger $f_{sc}$ bzw. $-f_{sc}$ angeordnet. Die Spektren von U und V sind wegen der vertikalen Tiefpaßfilter 5, 8 in vertikaler Richtung nicht überlappend.

Würden Chrominanzsignale, die ein herkömmliches Spektrum haben, einer dreidimensionalen Restseitenbandfilterung unterworfen, dann würden empfangsseitig bei Verwendung von Farbfernsehempfängern mit einem herkömmlichen PAL-Decoder Störungen in Form von Übersprechen der Farbdifferenzsignale untereinander auftreten. Der Grund dafür liegt darin, daß aufgrund der Restseitenbandfilterung die Spektren nicht mehr in ihrer Gesamtheit zur Verfügung stehen und damit keine fehlerfreie PAL-Decodierung bzw. Quadraturdemodulation möglich ist.

Folglich werden die Farbdifferenzsignale nach einem Merkmal der Erfindung in den vertikalen Tiefpaßfiltern 5 bzw. 8 auf 78$^c$/ph bandbegrenzt. Die Wirkung dieser Filter ist - wie oben bereits erläutert - aus Figur 3 ersichtlich.

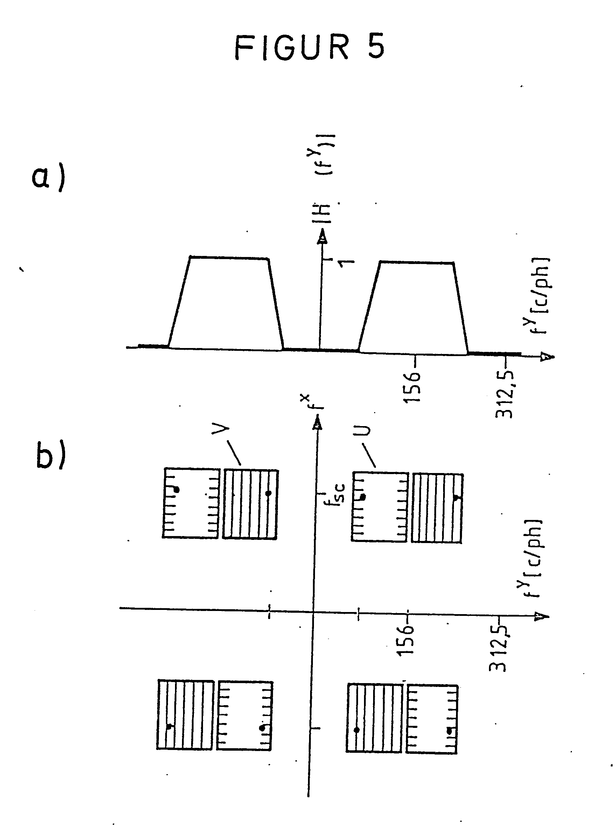

Das Signal am Ausgang des Restseitenbandfilters ist aus Figur 5b ersichtlich. Es entsteht durch die Restseitenbandfilterung im Spektrum der Farbdifferenzsignale im Bereich zwischen -78$^c$/ph und 78$^c$/ph Freiraum, der für die Übertragung von Luminanzinformation genutzt werden kann.

Die Figur 5a zeigt den Betrag der Übertragungsfunktion des Restseitenbandfilters in Richtung vertikaler Frequenzen. Es ist ersichtlich, daß das Restseitenbandfilter nur im Bereich zwischen 78 und 234$^c$/ph und zwischen -234 und -78$^c$/ph durchlässig ist. Die Nyquistflanken des Restseitenbandfilters treten bei ± 78 und ± 234$^c$/ph auf.

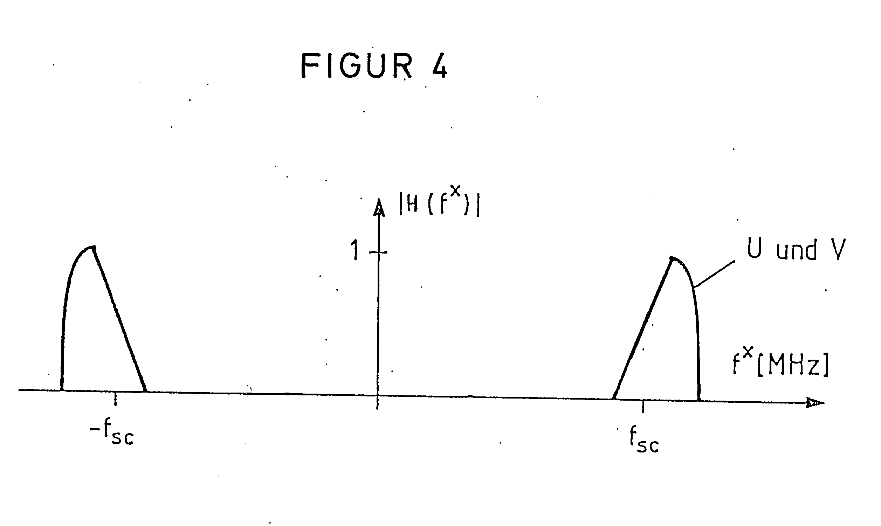

Die Figur 4 veranschaulicht die Wirkung des Restseitenbandfilters 12 in Richtung horizontaler Frequenzen. Es ist ersichtlich, daß nur der Frequenzbereich oberhalb des Farbhilfsträgers $f_{sc}$ mit Chrominanzinformation belegt ist. Die Nyquistflanke tritt bei ± $f_{sc}$ auf. Der Frequenzbereich unterhalb des Farbhilfsträgers steht damit für die Übertragung von Luminanzinformation zur Verfügung.

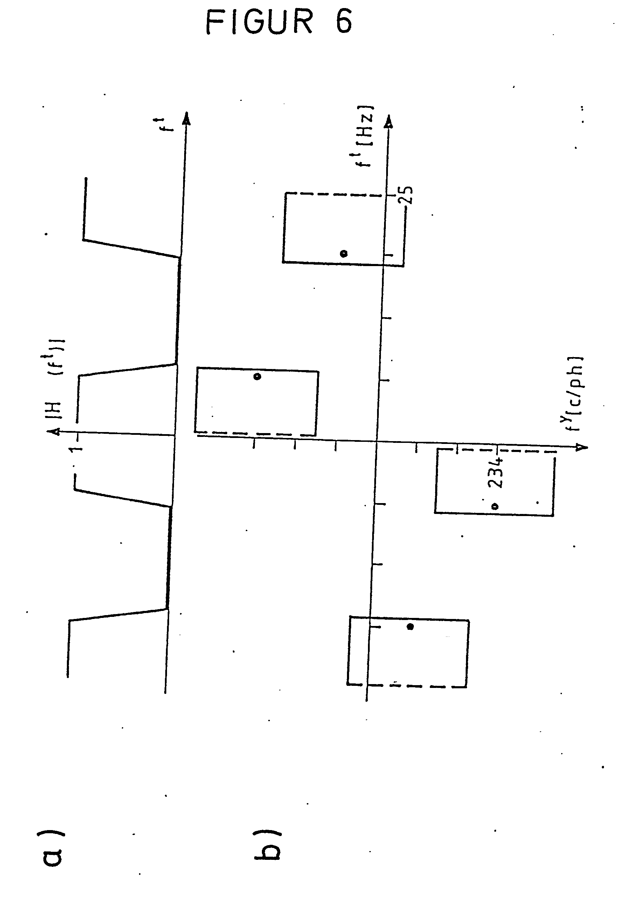

Die Figur 6 veranschaulicht die Wirkung des Restseitenbandfilters 12 in Richtung zeitlicher Frequenzen. Es ist aus Figur 6b ersichtlich, daß der Frequenzbereich zwischen $f_t$ = 6.25 Hz und $f_t$ = 18.75 Hz frei von Chrominanzinformation ist und damit für die Übertragung von Luminanzinformation zur Verfügung steht. Die Figur 6a zeigt den Betrag der Übertragungsfunktion des Restseitenbandfilters 12 in Abhängigkeit von den zeitlichen Frequenzen $f_t$. Die Nyquistflanken treten bei ± 6.25 und ± 18.75 Hz auf.

Zusammenfassend betrachtet ist es aufgrund der beschriebenen dreidimensionalen Restseitenbandfilterung des PAL-modulierten Chrominanzsignals möglich, die zur Chrominanzsignalübertragung nötige Bandbreite im Vergleich zum eingangs genannten Stand der Technik erheblich zu reduzieren. Diese im Vergleich zum Stand der Technik eingesparte Bandbreite kann für die Übertragung des Luminanzsignals zur Verfügung gestellt werden, wodurch die Luminanzauflösung erhöht werden kann.

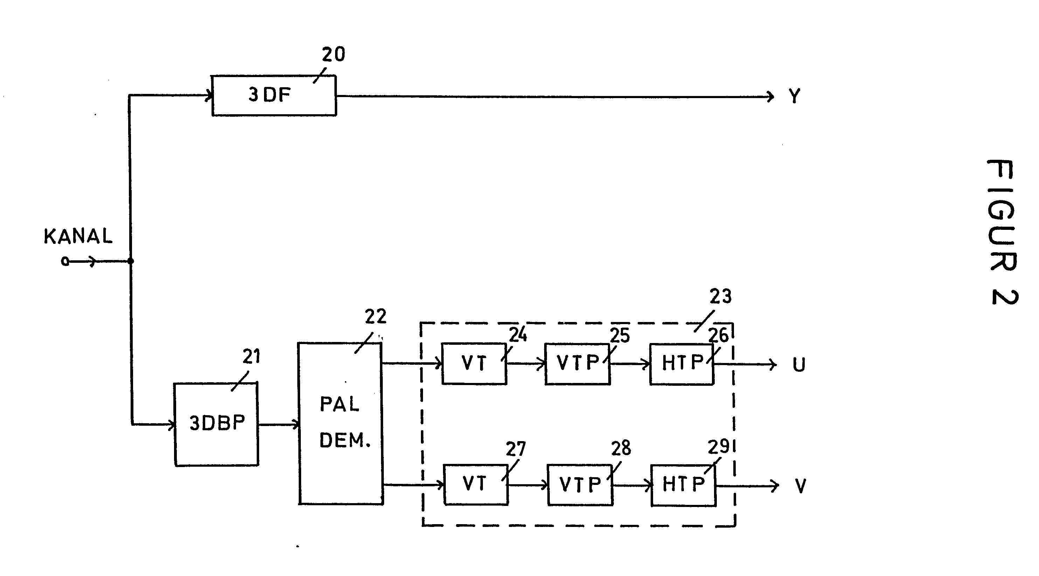

Die Figur 2 zeigt ein Ausführungsbeispiel für eine Einrichtung zur Decodierung von Farbfernsehsignalen. Am Eingang liegt das über den Übertragungskanal übertragene Farbfernsehsignal an. Dieses wird einerseits einer dreidimensionalen Filterschaltung 20 und andererseits einem dreidimensionalen Bandpaßfilter 21 zugeführt.

In der dreidimensionalen Filterschaltung 20 werden im wesentlichen die horizontal hochfrequenten Luminanzsignalanteile einer vertikal-zeitlichen Filterung zur "cross-luminance"-Reduktion unterworfen. Am Ausgang der dreidimensionalen Filterschaltung 20 steht das Luminanzsignal Y zur Verfügung.

Im dreidimensionalen Bandpaßfilter 21 werden die Chrominanzsignalanteile von den Luminanzsignalanteilen getrennt und einem herkömmlichen PAL-Demodulator 22 zugeführt. Die Ausgangssignale des PAL-Demodulators 22 werden einer dreidimensionalen Filterschaltung 23 zugeführt. In dieser dreidimensionalen Filterschaltung 23 durchläuft das Farbdifferenzsignal U ein kombiniertes vertikalzeitliches Filter 24, ein vertikales Tiefpaßfilter 25 und ein horizontales Tiefpaßfilter 26. Das Farbdifferenzsignal V durchläuft ein kombiniertes vertikalzeitliches Filter 27, ein vertikales Tiefpaßfilter 28 und ein horizontales Tiefpaßfilter 29.

Die vertikal-zeitlichen Filter 24 bzw. 27 dienen zur Reduktion von "cross-colour"-Störungen. Die vertikalen Tiefpaßfilter 25 bzw. 28 bewirken eine vertikale Bandbegrenzung der Farbdifferenzsignale auf 78$^c$/ph und sind wegen der Verwendung der Restseitenbandübertragung zur fehlerfreien Trennung der beiden Farbdifferenzsignale voneinander notwendig. Mittels der horizontalen Tiefpaßfilter 26 bzw. 29 erfolgt eine Bandbegrenzung der Farbdifferenzsignale in Richtung horizontaler Frequenzen bei 0,7 MHz.

Wird zum Empfang des übertragenen Signals ein Farbfernsehempfänger mit einem herkömmlichen PAL-Decoder verwendet, dann tritt im vertikal niederfrequenten Bereich aufgrund der senderseitig verwendeten Bandbegrenzung der Farbdifferenzsignale auf 78$^c$/ph kein Übersprechen der Farbdifferenzsignale untereinander auf. Im vertikal höherfrequenten Bereich tritt zwar Übersprechen der Farbdifferenzsignale untereinander auf, aber dieses wird durch die cos-förmige Filterung bei der PAL-Demodulation so stark gedämpft, daß die Störungen tolerierbar sind.

Demzufolge kann zum Empfang eines mit einem Coder nach der Erfindung codierten Farbfernsehsignals sowohl ein Farbfernsehempfänger mit einem herkömmlichen Farbdecoder als auch ein Farbfernsehempfänger mit einem Decoder nach der Erfindung verwendet werden.

## Ansprüche

1. Einrichtung zur Codierung von Farbfernsehsignalen nach dem PAL-Standard, welche aufweist:
-eine Matrixschaltung zur Umwandlung von RGB-Eingangssignalen in ein Luminanzsignal und zwei Farbdifferenzsignale,
- eine mehrdimensionale Filterschaltung im Weg des Luminanzsignals,
- eine mehrdimensionale Filterschaltung im Weg der Farbdifferenzsignale,
- einen PAL-Modulator zur Umwandlung der Farbdifferenzsignale in ein moduliertes Chrominanzsignal,
- eine Additionsschaltung zur Addition von Luminanzsignal und moduliertem Chrominanzsignal,
**dadurch gekennzeichnet, daß**
- zwischen dem PAL-Modulator (10) und der Additionsschaltung (14) eine Schaltung (11) zur mehrdimensionalen Restseitenbandfilterung des modulierten Chrominanzsignals vorgesehen ist, und
- die mehrdimensionale Filterschaltung (3) im Weg der Farbdifferenzsignale ein vertikales Tiefpaßfilter (5, 8) enthält.

2. Einrichtung nach Anspruch 1, **dadurch gekennzeichnet,** daß die Schaltung (11) einen Verstärker (13) enthält, dessen Verstärkungsfaktor 2 ist.

3. Einrichtung zur Decodierung von Farbfernsehsignalen nach dem PAL-Standard, welche aufweist:
- einen PAL-Demodulator zur Umwandlung des modulierten Chrominanzsignals in zwei Farbdifferenzsignale,
- eine mehrdimensionale Filterschaltung im Luminanzkanal, und
- eine mehrdimensionale Filterschaltung im Chrominanzkanal,
**dadurch gekennzeichnet, daß**
- zwischen dem Übertragungskanal und dem PAL-Demodulator (22) ein mehrdimensionales Bandpaßfilter (21) angeordnet ist, und
- die mehrdimensionale Filterschaltung im Chrominanzkanal ein vertikales Tiefpaßfilter (25, 28) enthält.

4. Verfahren zur Übertragung von Farbfernsehsignalen nach dem PAL-Standard, **dadurch gekennzeuichnet,** daß senderseitig ein Coder gemäß Anspruch 1 und 2 und empfangsseitig ein PAL-Farbfernsehempfänger mit einem herkömmlichen PAL-Decoder verwendet wird.

5. Verfahren zur Übertragung von Farbfernsehsignalen nach dem PAL-Standard, **dadurch gekennzeichnet,** daß senderseitig ein Coder gemäß Anspruch 1 und 2 und empfangsseitig ein PAL-Farbfernsehempfänger mit einem Decoder gemäß Anspruch 3 verwendet wird.

FIGUR 1

# FIGUR 2

# FIGUR 3

# FIGUR 4

FIGUR 5

# FIGUR 6

a)

b)